# EUROPEAN PATENT SPECIFICATION

(11) **EP 4 042 634 B1**
(45) Date of publication and mention of the grant of the patent: **25.12.2024**
(21) Application number: 19786749.2
(22) Date of filing: 08.10.2019
(51) Int. Cl.: H04L 12/18

(54) **COMPUTER-IMPLEMENTED METHOD OF RUNNING A REAL-TIME COLLABORATION SESSION AND WEB COLLABORATION SYSTEM**
COMPUTERIMPLEMENTIERTES VERFAHREN ZUM BETRIEB EINES ECHTZEITKOLLABORATIONSSITZUNGS- UND WEBKOLLABORATIONSSYSTEMS
PROCÉDÉ MIS EN OEUVRE PAR ORDINATEUR D'EXÉCUTION DE SESSION DE COLLABORATION EN TEMPS RÉEL, ET SYSTÈME DE COLLABORATION WEB

(43) Date of publication of application: 17.08.2022
(73) Proprietor: Unify Beteiligungsverwaltung GmbH & Co. KG, 81739 Munich (DE)
(72) Inventor: TSIATSIKAS, Zisis, 54352 Ano Toumpa Thessaloniki (GR); PAGONIS, Athanasios, 15235 Vrilissia (GR)
(74) Representative: Schaafhausen Patentanwälte PartGmbB
(86) International application number: PCT/EP2019/077249
(87) International publication number: WO 2021/069065

(56) References cited:
- WO-A1-2018/126134
- US-A1- 2014 329 511
- US-A1- 2016 134 666

## Description

The present invention relates to a computer-implemented methods of running a real-time collaboration session as well as to a web collaboration system.

In prior art, web collaboration platforms and applications are known by means of which web collaboration sessions, or in particular, conferences may be held with a predetermined number of users participating via a communications network using respective clients.

Since the participants are connected to each other via respective communication channels, over which audio and video data streams are transmitted during a web conference, bandwidth usage is a central issue. Usually, the appropriate codec selection between conference participants is performed via a media server entity, wherein each participant negotiates the audio and video codecs which have to be used for the specific session establishment.

Document US 2014/0329511 A1 relates to audio conferencing. Audio signals are received and transformed to a spectrum, and then modified by mel-frequency scaling and logarithmic scaling before a second-order transform. The obtained coefficients can be further processed before carrying out the similarity comparison between signals. Voice activity detection and other information like mute signalling can be used in the formation of the similarity information. The resulting similarity information can be used to form groups, and the resulting groups can be analyzed topologically. The similarity information can then be used to form a control signal for audio conferencing, e.g. to control an audio conference so that a signal of a co-located audio source is removed.

Document US 2016/0134666 A1 relates to system, apparatus, method and/or computer program product embodiments for providing survivable calling and conferencing. An embodiment operates by providing, by a first server, a first sub-conference to a plurality of user devices over first lines. The first sub-conference is combined with a second sub-conference to form a collective conference of the plurality of user devices. The first server accesses the conference. A second server is configured to provide the second sub-conference of the collective conference to the plurality of user devices over second lines, the first and second lines being distinct from each other. The collective conference may provide resilient and reliable sharing of information among participants and may leverage dispersed elements or diverse links simultaneously without impediments of echoes, loops, or other impacts.

Document WO 2018/126134 A1 describes a unified, browser-based enterprise collaboration platform. In particular, a system for enterprise collaboration is associated with an overlay network, such as a content delivery network (CDN). The overlay network comprises machines capable of ingress, forwarding and broadcasting traffic, together with a mapping infrastructure. The system comprises a front-end application, a back-end application, and set of one or more APIs through which the front-end application interacts with the back-end application. The front-end application is a web or mobile application component that provides one or more collaboration functions. The back-end application comprises a signaling component that maintains state information about each participant in a collaboration, a connectivity component that manages connections routed through the overlay network, and a multiplexing component that manages a multi-peer collaboration session to enable an end user peer to access other peers' media streams through the overlay network rather than directly from another peer. Peers preferably communicate with the platform using WebRTC. A collaboration manager component enables users to configure, manage and control their collaboration sessions.

Usually, in prior art, the codec pre-configuration and selection is based on either a massive provisioning of the devices or on other custom selections per participant. However, this is a rather static approach, which may not always provide the optimal solution for specific (and maybe varying) requirements, and which thus may impact the customer experience during a web conference between a plurality of remotely located participants.

Therefore, the present invention is based on the object to overcome the drawbacks in existing web collaboration systems, applications, and platforms in view of the selection of an appropriate coded used for the communication channels between a plurality of clients during a web conference. In particular, the present invention is based on the object to a provide computer-implemented method and a corresponding web collaboration system according to which bandwidth is used more efficiently, and in particular, adapted to varying requirements.

This object is solved according to the present invention by a computer-implemented method of running a real-time collaboration session having the features according to claim 1 and by a web collaboration system having the features according to claim 11. Preferred embodiments of the invention are specified in the respective dependent claims.

Accordingly, a computer-implemented method of running a real-time collaboration session is provided, wherein a every user participating in the collaboration session is connected to every other users participating in the collaboration session with his or her client via a respective communication channel, wherein the method comprises the steps of determining, whether any users participating in the collaboration session, are collocated in a same physical first room, and if it is determined that at least two users are collocated in the same physical first room, then determining the physical distance between the respectively used clients of the at least two users, and determining the noise level prevailing in the area between the at least two users, and based on the determination of the collocation of the at least two users being in the same physical first room, on the determination of the distance between the at least two users, and on the determination of the noise level, selecting a codec, in particular, an audio codec, for the communication channel between the at least two collocated users.

According to a preferred embodiment, the audio codec used for the communication channel between the at least two users in the first physical room is selected to be a lower codec using less bandwidth than a codec used for a communication channel between either one of the at least two users and a user in another second physical room.

According to another preferred embodiment, the step of determining collocation of at least two users in the first physical room comprises taking at least one first voice sample of a first user, wherein the audio in a stream arriving in the first user's headphone is compared to the audio received, at the same time, in the first user's microphone or receiver.

According to still another preferred embodiment, if the first voice sample comprises first audio signals from the first user and second audio signals from another user, in particular, from a second user, it is determined that the first user and the second user are collocated in the same physical first room.

Further, it is preferable, if the at least one first voice sample is stored in a database.

The method may further comprise a step of taking at least one second voice sample of the collocated second user.

Also, the second voice sample may be stored in the database.

According to another preferred embodiment, the distance between the first user and the second user is calculated from the density of the second audio signal comprised in the first voice sample of the first user.

Moreover, the audio codec used for the communication channel between the first user in the first physical room and a fourth user in the second physical room may be a preselected codec or a codec obtained from massive provisioning.

Preferably, the audio quality received via the communication channels of collocated users is monitored continuously, and if a degradation of the audio quality is detected, then the coded currently used is re-negotiated.

Further, according to the present invention, a web collaboration system for carrying out a computer method as described above is provided, wherein the web collaboration system comprises a media server connected, via a communication network to at least a first and a second client located in a first physical room, and to at least another client located in a second physical room.

Thus, by means of the method described above and the corresponding web collaboration system, external factors impacting customer experience in a conference are eliminated by efficiently selecting codecs. Since the distance and noise criteria are included in the dynamic codec selection for users or clients collocated in one and the same physical room, the latter may be re-negotiated so as to be more efficiently, in particular, with respect to bandwidth requirements and thus, with respect to cost. Since the audio quality received in the respective streams over the respective communication channels for users collocated in one room are monitored continuously, audio quality degradation is detected immediately and codecs will thus be re-negotiated accordingly so as to increase the audio quality again. However, this is done gradually so as to not waste bandwidth unnecessarily. By the inventive procedure, thus, always the codec is selected in a most efficient manner regarding audio quality requirements and also bandwidth usage.

The invention and embodiments thereof will be described below in further detail in connection with the drawing.
- Fig. 1: illustrates a scenario of a web conference with a plurality of participants;
- Fig. 2: shows a flow chart of the method of running a real-time collaboration session according to an embodiment of the invention;
- Fig. 3: illustrates another scenario of the web conference with a plurality of participants;
- Fig. 4: illustrates another scenario of a web conference with a plurality of participants; and
- Fig. 5: illustrates the scenario shown in Fig. 4 after re-negotiation of the codec.

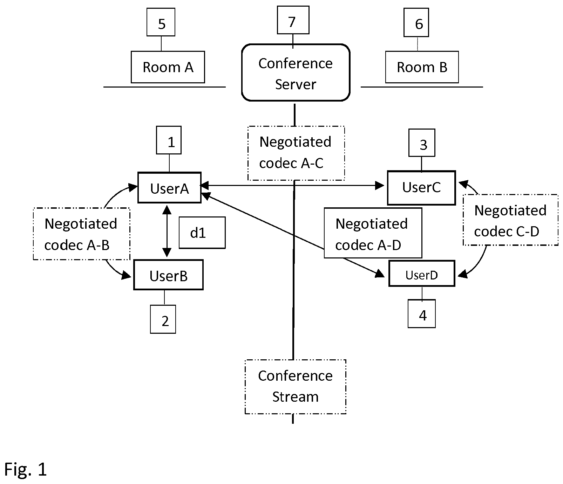

Fig. 1 illustrates a scenario of a web conference with a plurality pf participants. Namely, in the embodiment shown here, a first user A using a first client 1 and a second user B using a second client 2 are located together in a first room A, indicated by reference numeral 5. The first room A may be an open space office environment or the like; in any case, the first room is a physical room, and thus, the first user A and the second user B are physically collocated. Further, a third user C using a third client 3 and a fourth user D using a fourth client 4 are located together in a second room B, indicated by reference numeral 6. Again, the second room B may be an open space office environment or the like; and in any case, also the second room is a physical room, and thus, the third user C and the fourth user D are also physically collocated. Further, all clients 1, 2, 3, and 4 are connected to each other over a central conference or media server 7 via respective communication paths.

However, regarding the above described arrangement which is illustrated in Fig. 1, with respectively two users being collocated in a room, it is assumed that preconfigured codec selections, as described above with respect to the prior art, might not be the most appropriate approach as to bandwidth efficiency and also, as to specific requirements (for example, requirements specific to the topology, i.e., distance and noise characteristics in an open space office).

In the illustrated example of Fig. 1, user A and user B are located in the first room A, having a topological distance *d1* between them. The distance between the participants or users who are collocated in the same physical open space or room provides the opportunity to take advantage of the air channel for communicating pieces of data which otherwise should be conveyed through the communication network. This means that if the distance *d1* is, for example, only 1 m, then the two users, for example, the first user A and the second user B, or the third user C and the fourth user D, already have a communication channel via the air. And thus, it is assumed that they actually do not need the same audio stream quality which would be necessary for the rest of the users which are located remotely, i.e. in this case in a totally different room. For example, there is a communication channel via the air between the first and second users A, B in the first room A, and there is a communication channel via the air between the third and fourth users C, D in the second room. Thus, a lower audio stream quality could be used for the first communication channel 11 between the first client 1 / first user A and the second client 2 / second user B and a lower audio stream quality could also be used for the communication channel between the third client 3 / third user C and the fourth client 4 / fourth user D, while the other communication channels, for example, a communication channel 12 between the first client 1 / first user A and the third client 3 / third user C or the communication channel 13 between the first client 1 / first user A and the fourth client 4 / fourth user D would be considered to require a higher audio stream quality, because no additional air communication channel is present here.

Therefore, in the example described above, the codec selection for the communication channel between the first client / first user A and the second client 2 / second user B will not be the same as the one according to the negotiation between the first client 1 / first user A and the third client 3 / third user C. As explained above, since the first user A and the second user B are located in the same room A in a close distance, there is no need to waste the conference resources, in terms of bandwidth, for the participants who are closely located to each other, and have a path of communication via the physical air channel in the open space office. However, there are two additional factors that also need to be considered for providing an optimum audio and/or video experience to the users, namely,
- the distance between the users collocated in one room, and
- the noise in the room, in which the users are collocated.

Therefore, according to an embodiment, the audio codecs are efficiently selected based on the distance between the collocated users or participants, whereby also the noise level in the room in which the users are collocated is taken into account for the appropriate codec selection.

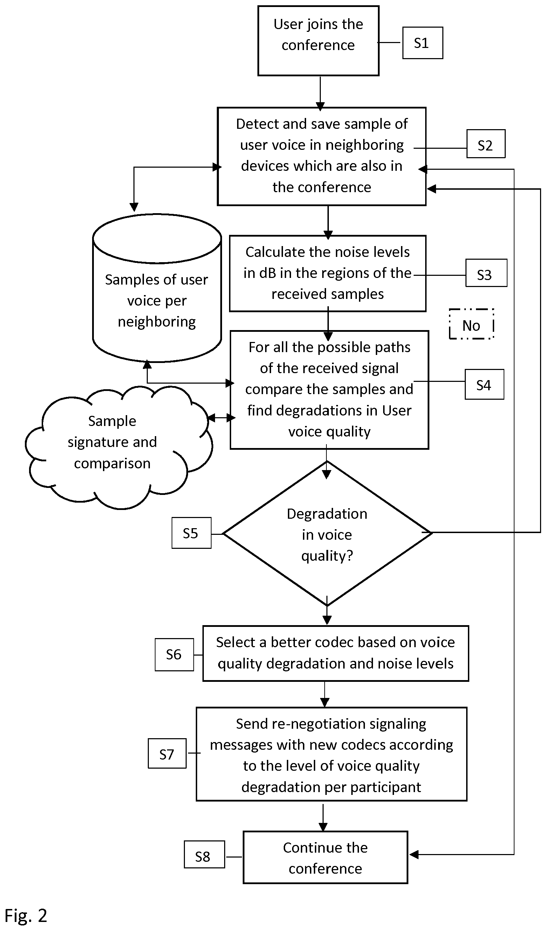

Fig. 2 shows a flow chart of the method of running a real-time collaboration session according to an embodiment of the invention. Here, in a first step S 1, the method starts with a first user A (using a first client 1, as illustrated in Fig. 1) joining a virtual real-time web collaboration session, as a video conference, or simply an audio or telephone conference. It is assumed that a preconfigured selection of codecs has already been performed for all clients, for example, by using massive provisioning. Alternatively, instead of using massive provisioning, the user may also have selected a preconfigured codec himself.

In the second step S2, as it has been determined that there are two collocated users or participants, for example the first user A and the second user B have been determined to be collocated in the first room A, as outlined above with reference to Fig. 1, then a voice sample is taken for every user who has been determined to be collocated in that room. Namely, a voice sample of the first user A is taken over the respective microphones of the neighboring users, and the voice sample of the first user A which has been taken with his or her own microphone will be stored together with the other voice samples which have been taken by using the other microphones of users in the same room, as outlined above so that these samples may be retrieved and compared later on (see step S4).

In the subsequent step S3, the level of ambient noise will be determined by calculating the ambient noise for different areas in the room in which at least two collocated users have been determined who are participating in a web collaboration session or a telephone conference. For example, the ambient noise in the first room A is calculated in various areas, in particular, in the areas between the users or in the vicinity of the users who are collocated.

Then, in the fourth step S4, as already mentioned above, the voice samples which have been stored in a database will be compared using, for example, an open source library. In step S5, it is then determined, whether there is a degradation in the user voice quality, which is expressed either in a low density in the voice sample or in the level of the ambient noise in the corresponding area surrounding the user of that voice sample. If no voice degradation is detected, then the conference is continued and the steps listed above are repeated after a predetermined time period, for example, after one minute, by going back to step S2 for starting and executing the above explained procedure again.

However, if a voice degradation has been determined to have occurred, then depending on the degradation result, a better codec as to voice quality will be selected and re-negotiated gradually in step S6. Subsequently, in step S7, the new re-negotiation signaling messages are released to the corresponding participants, and in step S8, the conference is continued and the steps outlined above are repeated after a preset period of time, e.g. after one minute, by going back to step S2, from which the procedure re-starts again.

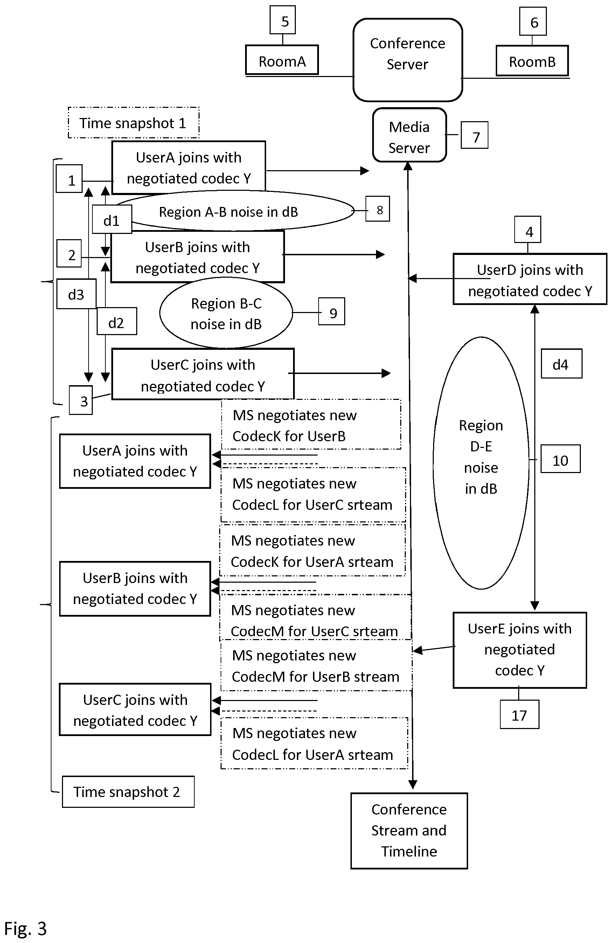

Fig. 3 illustrates another scenario of the web conference with a plurality of participants. On the basis of this embodiment illustrated here, the process of re-negotiating codecs in a bandwidth-efficient manner will be described, whereby the distances between the respective users are taken into account as well as the noise levels in the physical space, here, in the first room A and in the second room B. The method steps described below exemplify the general steps outlined in connection with Fig. 2.

Here, in a first physical room A, there are three users collocated, namely, a first user A, a second user B, and a third user C. In other words, the first client 1, the second client 2, and the third client 3 are collocated in the first room 5. In a second physical room B, there are collocated users D and E, and their respective clients. The users in the first room 5 (first room A) are located in the latter with a predetermined distance from each other, as well as there is a predetermined distance between the users D and E in the second room 6 (second room B). Namely, in Fig. 3,
- d1: depicts the distance between the first user A and the second user B in the corresponding open space ROOM A or first room 5.
- d2: depicts the distance between the second user B and the third user C in the corresponding open space ROOM A or first room 5.
- d3: depicts the distance between the first user A and the third user C in the corresponding open space ROOM A or first room 5.
- d4: depicts the distance between the fourth user D and the fifth user E in the corresponding open space ROOM B or second room 6.

Having in mind the above, we assume that in a first time snapshot 1, the first, second, and third users A, B, C join the same conference room, namely, the first room 5, their respective clients thereby performing a negotiation with a preconfigured codec, based on the massive provisioning process or based on specific custom selections per participant.

Also, in Fig. 3 the areas between the collocated users and the noise levels in these regions are illustrated schematically. Thus, a first area A-B, indicated by reference numeral 8, presents the physical open space room between the first user A and the second user B. The second area B-C, indicated by reference numeral 9, represents the physical open space room between the second user B and the third user C. Finally, the third area D-E, indicated by reference numeral 10, represents the physical open space region between the fourth user D and the fifth user E in the second room 6. All these areas are illustrated so as to indicate the measuring of the noise levels around the respective users A, B, C, D, E in the respective rooms A, B.

Now, the codec selection procedure, specifically based on the distance and noise levels, will be outlined in the following with respect to the scenario illustrated in Fig. 3. In a first step, at which the overall procedure starts, the first user A joins the conference having a specific negotiated CodecY selection (either massively provisioned, or selected by user A). All users participating in the conference are connected to the conference server or media server 7 with their respective clients, and all clients are equipped with respective microphones. Then, in the second step, as the first user A starts talking in the conference, samples are taken of the first user's voice being recorded in the microphones of the neighboring devices, i.e., in this example, in the second user's microphone and in the third user's microphone.

Namely, as the respective positions of the users are known (assuming that the users' positions in the open space have already been stored in the system manually from the administrator, using provisioning), the audio in the stream which arrives in the headphones, e.g., in the headphones connected to or comprised in user A's client, is compared to the audio received in the corresponding microphone, e.g., in the microphone connected to or comprised in user A's client. If the first user's A voice arrives in the microphone of the second user B and the third user C, they are collocated with certainty, and additionally, the density of the received signal provides knowledge of the actual distances d1 (between the first user A and the second user B in the first room A), d2 (between the second user B and the third user C in the first room A), and d3 (between the first user A and the third user C in the first room A). This procedure is followed for all users collocated in one room.

Further, in this embodiment, the samples are taken for a time period of 10 seconds per user who is located in the same room. Here, that means there is one sample taken for 10 seconds in the second user's microphone, and another sample is taken for another 10 seconds in the third user's microphone.

In the next step, the noise level determination between the respective users, who have participated in the above described sampling procedure, is performed. That means, the noise level in the first area 8 between the first user A and the second user B and the noise level in the second area 9 between the second user B and the third user C in the first room A is determined in dB. The codec selection will be based on the thus determined noise level and the distance factors outlined above.

Based on the result of the procedure of taking samples from the users who are collocated, as described above with respect to the second step, in the fourth step, the samples are compared in order to identify, if the received signal pertains to a good quality, for example, of the first user A from the air channel, or not. If there is no voice degradation, then the method goes back to the second step again and starts all over, as described above.

If a voice degradation is identified, then the procedure continues with step S6 (see Fig. 2) and tries to negotiate a better coded in terms of voice quality, however, on the expense of bandwidth consumption which will increase in this case.

At a second time snapshot 2, illustrated below the scenario relating to the first time snapshot 1 in Fig. 3, a situation is shown, in which the voice samples have already been taken, i.e., the voice sample of the first user A in the second and third user's B, C microphones. Here, it has been determined that the media server 7 should negotiate a better codec in terms of voice quality on the expense of bandwidth consumption for the third user C compared to the codec negotiated with the second user B. It is noted, that in this re-negotiation procedure, only the stream between the media server and the third user C or his or her client, respectively, will be considered. The stream which will transmits the first user's A voice to the second user B will be transmitted to the second user B using the codec which has been negotiated with media server 7. That is, based on the calculations, the first user's A voice will travel from his or her microphone to the conference server or media server 7 and the latter will provide this stream to the second, third, fourth, and fifth users B, C, D, and E. For each one of those users the media server 7 negotiates a specific codec for transmitting the stream of the first user A. Thus, based on the detected distance and noise levels, the media server 7 negotiates with the second user B CodecK for the communication channel to the first user A. It also negotiates CodecL for the communication channel between the third user C and the first user A. Finally, it does not perform a new negotiation for the fourth and fifth users D and E, because these users are not affected by the distance and/or noise levels of the first room A. The difference in CodecK and CodecL, for the seond and third users B and C, is performed exactly because the first, second, and third users A, B, and C already have a voice communication path via the air channel. Of course the latter is affected (a) by the distance between the users and (b) by the noise levels. In particular, this means that if d1 equals, for example, 1 meter, then CodecK may be selected such that it does not affect the communication between the first user A and the second user B, and such that it still is efficient for the network and the bandwidth per user.

In the next step (step 7, see Fig. 2), the different signalling messages are sent to the corresponding users, and after the negotiation, the stream continues to operate and in step 8 (see Fig. 2), the conference continues normally. As already outlined with respect to Fig. 2, the procedure will go back to step S2 and continue to perform the following steps, for example, every 3 minutes. However, it is noted that the fifth step (S5, see Fig. 2) will always be the decision step for taking actions regarding the codec negotiation process. If no degradation is determined, already here, the method will return to the second step (S2) already here. Otherwise, the returning to the second step will take place after the last step S8 (see Fig. 2).

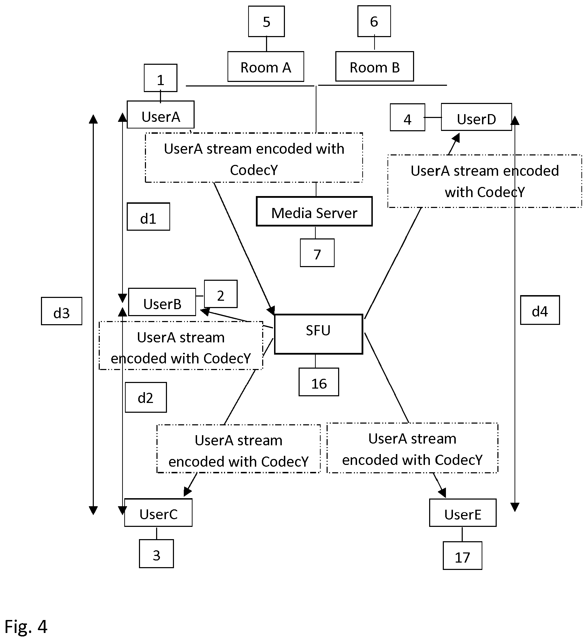

Fig. 4 illustrates another scenario of a web conference with a plurality of participants or users. Again, there is a first room A (first room 5) in which a first user A (using a first client 1), a second user (using a second client) and a third user C (using a third client) are located, and a second room B (second room 6), in which a fourth user D (using a fourth client) and a fifth user E (using a fifth client) are located. All users or rather their respective clients are connected, via respective communication channels 11, 12, 13, 14, 15 to a selective forwarding unit 16, comprised, for example, in the media server 7. Here, initially, the streams are relying on either massive provisioned codecs or pre-configured codec selections. That means in this embodiment, the stream between the first user A and the second user B encodes with CodecY, as well as the stream between the first user A and the third user C, and the stream between the first user A and the fourth user D in the second room and the fifth user E, also located in the second room. Thus, all users use CodecY based on massive provisioning, which is, however, not efficient regarding bandwidth usage for collocated users.

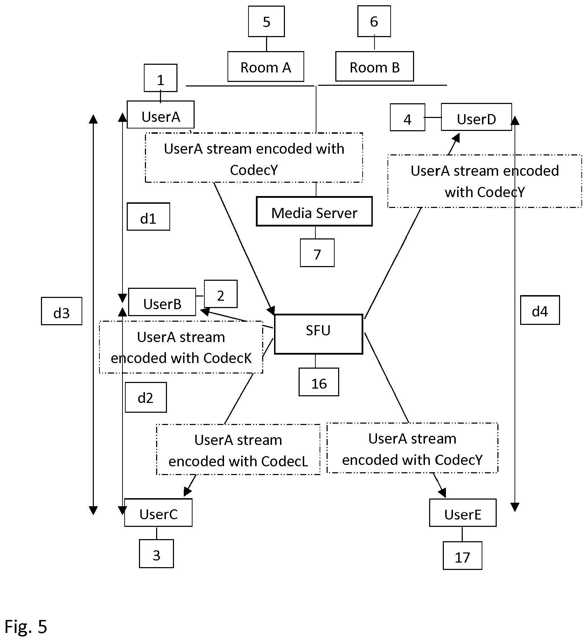

Fig. 5 shows the scenario after application of the method described above. Here, it can be seen that the bandwidth utilization changes dynamically based on the respective distances between the users and the noise levels in the different regions between them, which have been determined. Thus, the users may initiate the conference following the approach described in Fig. 4, but then, the codecs are re-negotiated dynamically, based on the distances and/or the ambient noise levels in the open space of the respective physical rooms (here, the first room A and the second room B). Namely, after identifying the voice quality of the first user A in the receivers of the collocated second and third users B, C, the codecs are re-negotiated by gradually selecting those which meet the requirements as to bandwidth efficiency and voice quality.

Based on bandwidth efficiency and voice quality requirements, better codecs are selected gradually based on the distance and the noise levels. Finally, this would mean that in a totally quite open space, for example, the first room A, the most efficient bandwidth allocation for collocated participants can be achieved. In the same way, assuming a full noisy open space first room A, the described method will operate for the collocated participants in the same way it will operate for those located in the second open space room B (i.e., using CodecY).

Thus, in Fig. 5 the streams are presented after the re-negotiations. That is, the stream between the first user A and the second user B will be encoded using CodecK, while at the same time the stream between the first user A and the third user C will be encoded using CodecL.

### Reference numerals

- 1: first client
- 2: second client
- 3: third client
- 4: fourth client
- 5: first room A
- 6: second room B
- 7: media server
- 8: first area
- 9: second area
- 10: third area
- 11, 12, 13, 14, 15: communication channels
- 16: selective forwarding unit (SFU)
- 17: fifth client

## Claims

1. Computer-implemented method of running a real-time collaboration session, wherein every user (A, B, C, D, E) participating in the collaboration session is connected to every other user (A, B, C, D, E) participating in the collaboration session with his or her client (1, 2, 3, 4, 17) via a respective communication channel (11, 12, 13, 14, 15), wherein the method comprises the steps of
- determining, whether any users (A, B, C, D, E) participating in the collaboration session, are collocated in a same physical first room (5), and if it is determined that at least two users (A, B, C) are collocated in the same physical first room (5), then
- determining the physical distance (d1, d2, d3) between the respectively used clients (1, 2, 3) of the at least two users (A, B, C), and
- determining the noise level prevailing in the area (8, 9, 10) between the at respectively used clients (1, 2, 3) of the at least two users (1, 2, 3), and
based on the determination of the collocation of the at least two users (A, B, C) being in the same physical first room (5), on the determination of the distance (d1, d2, d3) between the at least two users (A, B, C), and on the determination of the noise level, selecting a codec, in particular, an audio codec, for the communication channel (11, 12, 13) between the at least two collocated users (A, B, C).

2. Computer-implemented method according to claim 1, wherein the audio codec used for the communication channel (11, 12, 13) between the at least two users (A, B, C) in the first physical room (5) is selected to be a lower codec using less bandwidth than a codec used for a communication channel (12, 13) between either one of the at least two users (A, B, C) and a user (D, E) in another second physical room (6).

3. Computer-implemented method according to claim 1 or claim 2, wherein the step of determining collocation of at least two users (A, B, C) in the first physical room (5) comprises taking at least one first voice sample of a first user (A), wherein the audio in a stream arriving in the first user's headphone is compared to the audio received, at the same time, in the first user's microphone or receiver.

4. Computer-implemented method according to claim 3, wherein if the first voice sample comprises first audio signals from the first user (A) and second audio signals from another user (B, C), in particular, from a second user (B), it is determined that the first user (A) and the second user (B) are collocated in the same physical first room (5).

5. Computer-implemented method according claim 3 or claim 4, wherein the at least one first voice sample is stored in a database.

6. Computer-implemented method according to any one of the preceding claims 4 to 6, wherein the method further comprises a step of taking at least one second voice sample of the collocated second user (B).

7. Computer-implemented method according to claim 6, wherein the second voice sample is also stored in the database.

8. Computer-implemented method according to claim 4, wherein the distance (d1) between the first user (A) and the second user (B) is calculated from the density of the second audio signal comprised in the first voice sample of the first user (A).

9. Computer-implemented method according to any one of the preceding claims 2 to 8, wherein the audio codec used for the communication channel (12) between the first user (A) in the first physical room (5) and a fourth user (D) in the second physical room (6) is a preselected codec or a codec obtained from massive provisioning.

10. Computer-implemented method according to any one of the preceding claims, wherein the audio quality received via the communication channels (11) of collocated users is monitored continuously, and if a degradation of the audio quality is detected, then the coded currently used is re-negotiated.

11. Web collaboration system adapted for carrying out a computer method according to any one of the preceding claims, the web collaboration system comprising a media server (7) connected, via a communication network to at least a first and a second client (1, 2) located in a first physical room (5), and to at least another client (4, 5) located in a second physical room (6).

12. Web collaboration system according to claim 11, wherein the media server (7) comprises a selective forwarding unit (16) for selectively forwarding codecs during a web collaboration session.

## Patentansprüche

1. Computerimplementiertes Verfahren zur Durchführung einer Echtzeit-Kollaborationssitzung, wobei jeder an der Kollaborationssitzung teilnehmende Benutzer (A, B, C, D, E) mit jedem anderen an der Kollaborationssitzung teilnehmenden Benutzer (A, B, C, D, E) mit seinem oder ihrem Client (1, 2, 3, 4, 17) über einen jeweiligen Kommunikationskanal (11, 12, 13, 14, 15) verbunden ist, wobei das Verfahren die folgenden Schritte umfasst:
- Bestimmung, ob sich irgendwelche Benutzer (A, B, C, D, E), die an der Kollaborationssitzung teilnehmen, in demselben physischen ersten Raum (5) befinden, und wenn bestimmt wird, dass sich mindestens zwei Benutzer (A, B, C) in demselben physischen ersten Raum (5) befinden, dann
- Bestimmung der physikalischen Entfernung (d1, d2, d3) zwischen den jeweils genutzten Clients (1, 2, 3) der mindestens zwei Benutzer (A, B, C), und
- Bestimmung des in dem Bereich (8, 9, 10) zwischen den jeweils genutzten Clients (1, 2, 3) der mindestens zwei Benutzer (1, 2, 3) herrschenden Geräuschpegels, und
- basierend auf der Bestimmung der Kollokation der mindestens zwei Benutzer (A, B, C), die sich in demselben physischen ersten Raum (5) befinden, auf der Bestimmung des Abstands (d1, d2, d3) zwischen den mindestens zwei Benutzern (A, B, C) und auf der Bestimmung des Geräuschpegels, Auswahl eines Codecs, insbesondere eines Audiocodecs, für den Kommunikationskanal (11, 12, 13) zwischen den mindestens zwei kollokierten Benutzern (A, B, C).

2. Computerimplementiertes Verfahren nach Anspruch 1, wobei der für den Kommunikationskanal (11, 12, 13) zwischen den mindestens zwei Benutzern (A, B, C) in dem ersten physikalischen Raum (5) verwendete Audiocodec so ausgewählt wird, dass er ein niedrigerer Codec ist, der weniger Bandbreite verwendet als ein Codec, der für einen Kommunikationskanal (12, 13) zwischen einem der mindestens zwei Benutzer (A, B, C) und einem Benutzer (D, E) in einem anderen zweiten physikalischen Raum (6) verwendet wird.

3. Computerimplementiertes Verfahren nach Anspruch 1 oder Anspruch 2, wobei der Schritt der Bestimmung der Kollokation von mindestens zwei Benutzern (A, B, C) in dem ersten physikalischen Raum (5) das Aufnehmen mindestens einer ersten Sprachprobe eines ersten Benutzers (A) umfasst, wobei der im Kopfhörer des ersten Benutzers ankommende Tonstrom, mit dem Ton verglichen wird, der zur gleichen Zeit im Mikrofon oder Empfänger des ersten Benutzers empfangen wird.

4. Computerimplementiertes Verfahren nach Anspruch 3, wobei, wenn die erste Sprachprobe erste Audiosignale des ersten Benutzers (A) und zweite Audiosignale eines anderen Benutzers (B, C), insbesondere eines zweiten Benutzers (B), umfasst, bestimmt wird, dass sich der erste Benutzer (A) und der zweite Benutzer (B) in demselben physischen ersten Raum (5) befinden.

5. Computerimplementiertes Verfahren nach Anspruch 3 oder Anspruch 4, wobei die mindestens eine erste Sprachprobe in einer Datenbank gespeichert ist.

6. Computerimplementiertes Verfahren nach einem der vorhergehenden Ansprüche 4 bis 6, wobei das Verfahren ferner einen Schritt der Aufnahme mindestens einer zweiten Sprachprobe des kollokierten zweiten Benutzers (B) umfasst.

7. Computerimplementiertes Verfahren nach Anspruch 6, wobei die zweite Sprachprobe ebenfalls in der Datenbank gespeichert wird.

8. Computerimplementiertes Verfahren nach Anspruch 4, wobei der Abstand (d1) zwischen dem ersten Benutzer (A) und dem zweiten Benutzer (B) aus der Stärke des zweiten Audiosignals, das in der ersten Sprachprobe des ersten Benutzers (A) enthalten ist, berechnet wird.

9. Computerimplementiertes Verfahren nach einem der vorhergehenden Ansprüche 2 bis 8, wobei der für den Kommunikationskanal (12) zwischen dem ersten Benutzer (A) in dem ersten physikalischen Raum (5) und einem vierten Benutzer (D) in dem zweiten physikalischen Raum (6) verwendete Audiocodec ein vorgewählter Codec oder ein aus der massiven Bereitstellung erhaltener Codec ist.

10. Computerimplementiertes Verfahren nach einem der vorhergehenden Ansprüche, bei dem die über die Kommunikationskanäle (11) der kollokierten Benutzer empfangene Audioqualität kontinuierlich überwacht wird, und wenn eine Verschlechterung der Audioqualität festgestellt wird, der aktuell verwendete Code neu ausgehandelt wird.

11. Web-Kollaborationssystem, das zur Durchführung eines Computerverfahrens nach einem der vorhergehenden Ansprüche geeignet ist, wobei das Web-Kollaborationssystem einen Medienserver (7) umfasst, der über ein Kommunikationsnetzwerk mit mindestens einem ersten und einem zweiten Client (1, 2), die sich in einem ersten physikalischen Raum (5) befinden, und mit mindestens einem weiteren Client (4, 5), der sich in einem zweiten physikalischen Raum (6) befindet, verbunden ist.

12. Web-Kollaborationssystem nach Anspruch 11, wobei der Medienserver (7) eine selektive Weiterleitungseinheit (16) zur selektiven Weiterleitung von Codecs während einer Web-Kollaborationssitzung umfasst.

## Revendications

1. Procédé informatisé d'exécution d'une session de collaboration en temps réel, dans lequel chaque utilisateur (A, B, C, D, E) participant à la session de collaboration est connecté à chaque autre utilisateur (A, B, C, D, E) participant à la session de collaboration avec son client (1, 2, 3, 4, 17) par l'intermédiaire d'un canal de communication respectif (11, 12, 13, 14, 15), le procédé comprenant les étapes suivantes:
- détermination de si des utilisateurs (A, B, C, D, E) participant à la session de collaboration se trouvent dans la même première salle physique (5), et, s'il est déterminé qu'au moins deux utilisateurs (A, B, C) se trouvent dans la même première salle physique (5), alors
- détermination de la distance physique (d1, d2, d3) entre les clients respectivement utilisés (1, 2, 3) par les au moins deux utilisateurs (A, B, C), et
- détermination du niveau de bruit régnant dans la zone (8, 9, 10) entre les clients respectivement utilisés (1, 2, 3) des au moins deux utilisateurs (1, 2, 3), et
- sur la base de la détermination de la colocalisation des au moins deux utilisateurs (A, B, C) se trouvant dans la même première pièce physique (5), de la détermination de la distance (d1, d2, d3) entre les au moins deux utilisateurs (A, B, C) et de la détermination du niveau de bruit, sélection d'un codec, plus particulièrement d'un codec audio, pour le canal de communication (11, 12, 13) entre les au moins deux utilisateurs colocalisés (A, B, C).

2. Procédé informatisé selon la revendication 1, dans lequel le codec audio utilisé pour le canal de communication (11, 12, 13) entre les au moins deux utilisateurs (A, B, C) dans la première salle physique (5) est sélectionné de manière à être un codec inférieur utilisant moins de largeur de bande qu'un codec utilisé pour un canal de communication (12, 13) entre l'un des au moins deux utilisateurs (A, B, C) et un utilisateur (D, E) dans une autre deuxième salle physique (6).

3. Procédé informatisé selon la revendication 1 ou la revendication 2, dans lequel l'étape consistant à déterminer la colocalisation d'au moins deux utilisateurs (A, B, C) dans la première pièce physique (5) consiste à prélever au moins un premier échantillon de voix d'un premier utilisateur (A), l'audio d'un flux arrivant dans le casque du premier utilisateur étant comparé à l'audio reçu, au même moment, dans le microphone ou le récepteur du premier utilisateur.

4. Procédé informatisé selon la revendication 3, dans lequel, si le premier échantillon vocal comprend les premiers signaux audio du premier utilisateur (A) et les seconds signaux audio d'un autre utilisateur (B, C), en particulier d'un second utilisateur (B), il est déterminé que le premier utilisateur (A) et le second utilisateur (B) se trouvent dans la même première pièce physique (5).

5. Procédé informatisé selon la revendication 3 ou la revendication 4, dans lequel le au moins un premier échantillon de voix est stocké dans une base de données.

6. Procédé informatisé selon l'une des revendications précédentes 4 à 6, dans lequel le procédé comprend également une étape consistant à prélever au moins un deuxième échantillon de voix du deuxième utilisateur colocalisé (B).

7. Procédé informatisé selon la revendication 6, dans lequel le deuxième échantillon vocal est également stocké dans la base de données.

8. Procédé informatisé selon la revendication 4, dans lequel la distance (d1) entre le premier utilisateur (A) et le second utilisateur (B) est calculée à partir de la densité du second signal audio compris dans le premier échantillon de voix du premier utilisateur (A).

9. Procédé informatisé selon l'une des revendications précédentes 2 à 8, dans lequel le codec audio utilisé pour le canal de communication (12) entre le premier utilisateur (A) dans la première salle physique (5) et un quatrième utilisateur (D) dans la deuxième salle physique (6) est un codec présélectionné ou un codec obtenu à partir d'un approvisionnement massif.

10. Procédé informatisé selon l'une des revendications précédentes, dans lequel la qualité audio reçue via les canaux de communication (11) des utilisateurs colocalisés est surveillée en permanence, et si une dégradation de la qualité audio est détectée, le codage actuellement utilisé est renégocié.

11. Système de collaboration web adapté à la réalisation d'un procédé informatique selon l'une des revendications précédentes, le système de collaboration web comprenant un serveur média (7) connecté, via un réseau de communication à au moins un premier et un second client (1, 2) situés dans une première salle physique (5), et à au moins un autre client (4, 5) situé dans une seconde salle physique (6).

12. Système de collaboration web selon la revendication 11, dans lequel le serveur média (7) comprend une unité de transmission sélective (16) pour transmettre sélectivement les codecs pendant une session de collaboration web.
